## Europäisches Patentamt

## European Patent Office

## Office européen des brevets

(19)

(11) Numéro de publication: **0 062 554**
**B1**

(12)

# FASCICULE DE BREVET EUROPEEN

(45) Date de publication du fascicule du brevet:
**27.03.85**

(51) Int. Cl.⁴: **B 23 K 9/00**

(21) Numéro de dépôt: **82400479.0**

(22) Date de dépôt: **16.03.82**

(54) Ensemble mobile de soudage par points avec métal d'apport sous atmosphère gazeuse.

(30) Priorité: **08.04.81 FR 8107080**

(43) Date de publication de la demande:
**13.10.82 Bulletin 82/41**

(45) Mention de la délivrance du brevet:
**27.03.85 Bulletin 85/13**

(84) Etats contractants désignés:
**BE DE GB IT**

(56) Documents cités:
**DE - C - 687 427**
**FR - A - 1 402 195**
**FR - A - 1 460 997**
**GB - A - 839 661**
**US - A - 3 022 414**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Guichard, Michel, 49, rue du Lieutenant
Colonel Le Sabazec, F-78220 Voroflay (FR)**
Inventeur: **Jouaire, Alain, 293, Quai des Vignes,
F-59500 Douai (FR)**

(74) Mandataire: **Réal, Jacques et al, Régie Nationale des
Usines Renault 8-10, avenue Emile Zola,
F-92109 Boulogne-Billancourt (FR)**

BUNDESDRUCKEREI BERLIN

## Description

L'invention concerne le soudage à l'arc électrique, et s'applique en particulier au soudage automatique ponctuel à l'arc avec métal d'apport sous protection gazeuse, dénommé couramment soudage par points MAG.

Ce type de soudage est généralement utilisé pour des assemblages de pièces de haute tenue ou pour lesquels le soudage classique par résistance n'est pas envisageable, faute de pouvoir accéder à l'assemblage sur ses deux faces simultanément.

Ce procédé de soudage met en œuvre essentiellement le fil d'apport, qui est approvisionné par une bobine placée sur un dérouleur muni d'un frein et qui est entraîné par un moteur, et la torche du soudage qui guide ce fil jusqu'à l'endroit de la soudure, assure le contact électrique avec ce fil et produit la distribution du gaz de protection.

Ce procédé de nombreux incenvénients dus d'abord au fait que les divers organes de l'installation sont dispersés et réunis par des gaines de transport pour le fil qui entraînent des aléas de fonctionnement par suite des frottements et de l'encrassement. D'autre part, le retour du courant de soudage (pole négatif) est généralement réalisé par une prise de masse extérieure à la torche et souvent loin de celle-ci. De plus pour assurer une soudure correcte, les tôles doivent être parfaitement accostées et maintenues serrées pendant le soudage, ce qui est le plus souvent obtenu au moyen d'un presseur extérieur éloigné de la zone de soudage et adapté à chaque cas particulier. Par ailleurs, le frein de la bobine, constitué généralement par des rondelles de friction, délivre un couple de freinage très variable sur un tour et dans le temps, ce qui entraîne des aléas dans le dévidage. Etant donné qu'il n'existe généralement pas de capteur de fin de fil, lorsque les bobines sont vides, le courant de soudage étant maintenu, il se produit une remontée d'arc détériorant systématiquement le tube de contact de la torche. Enfin, pour conserver la position du point de soudure et sa qualité, la position de la torche de soudage doit être constante, ce qui est difficilement obtenu par les fixations traditionnelles qui entraînent des dispersions venant s'ajouter aux dispersions de réalisation de la torche, le tout nécessitant à chaque démontage de la torche un nouveau réglage.

Le brevet GB 839.661 décrit un dispositif destiné à effectuer du soudage par points MAG puisqu'il est prévu un dispositif d'alimentation en métal d'apport et un dispositif d'alimentation en gaz de protection. Le dérouleur de fil 9 et l'entraîneur 10 sont placés à une distance importante de la zone de soudage puisque ce dispositif d'alimentation est réuni à la poignée 3 par un guide flexible 12. Le tube 11 assure le retour du courant, mais il n'est pas prévu du tout que ce tube 11 assure la fonction de presseur, pas plus que l'embout 4 servant à retenir l'argon. Il n'existe donc pas de presseur assurant le retour du courant.

Le brevet FR 1.402.195 décrit un procédé de soudage à l'arc sous argon mais qui se fait sans métal d'apport par opposition aux porocédès connus et il n'y a donc en conséquence ni dérouleur ni entraîneur de fil; d'autre part il est clairement précisé dans le premier paragraphe de la colonne de droite de la page 3 que la borne positive est reliée à la pièce, c'est-à-dire que le retour du courant se fait par un moyen conventionnel.

Le brevet US 3.022.414 décrit un dispositif de soudage qui n'est pas du type concerné, puisqu'il s'agit d'un arc au carbone destiné à exécuter une soudure sans métal d'apport. Dans le cas où l'on fait un apport de métal, cet apport est réalisé manuellement. Par contre le retour du courant est effectué par le presseur.

Le but de l'invention est d'éliminer les inconvénients précédents en réalisant un ensemble cohérent assurant toutes les fonctions et utilisables en particulier par un robot.

Dans ce but, l'invention propose un ensemble mobile de soudage par points avec métal d'apport sous atmosphère gazeuse comportant un dérouleur de fil, un entraîneur de fil, une torche de soudage et un organe presseur assurant le retour du courant, caractérisé en ce que l'ensemble mobile comporte une base destinée à être fixée à l'extrémité d'un bras de robot ou de machine automatique, et une tête de soudage montée sur la base de manière à pouvoir coulisser axialement par rapport à celle-ci, le dérouleur de fil avec son frein et l'entraîneur de fil alimentant la tourche de soudage étant montés sur la base à proximité de la zone de soudage, le presseur étant monté sur la tête de soudage à proximité de l'arc, un ressort précontraint (5) étant prévu entre la base (1) et la tête (3) pour limiter l'effort d'accostage produit par le bras de robot ou de machine (2) au niveau de l'organe presseur.

Le frein du dérouleur de fil est constitué par un frein électromagnétique à poudre alimenté à l'aide d'une alimentation de courant stablisée pour fournir un couple de freinage constant. D'autre part, un capteur optique donne une information pour alerter l'utilisateur ou le robot lorsque la bobine est presque vide.

Enfin, ladite base de l'ensemble mobile est montée sur le dispositif de déplacement, en particulier sur le bras du robot, par un mode d'assemblage permettant un montage et un démontage rapide tout en assurant un repositionnement rigoureux.

D'autres particulairités de l'invention apparaîtront dans la description qui va suivre d'un mode de réalisation pris comme exemple et représenté sur le dessin annexé, sur lequel:

la fig. 1 est une vue en élévation de l'ensemble de soudage; et

la fig. 2 une vue partielle de dessus de l'extrémité de cet ensemble.

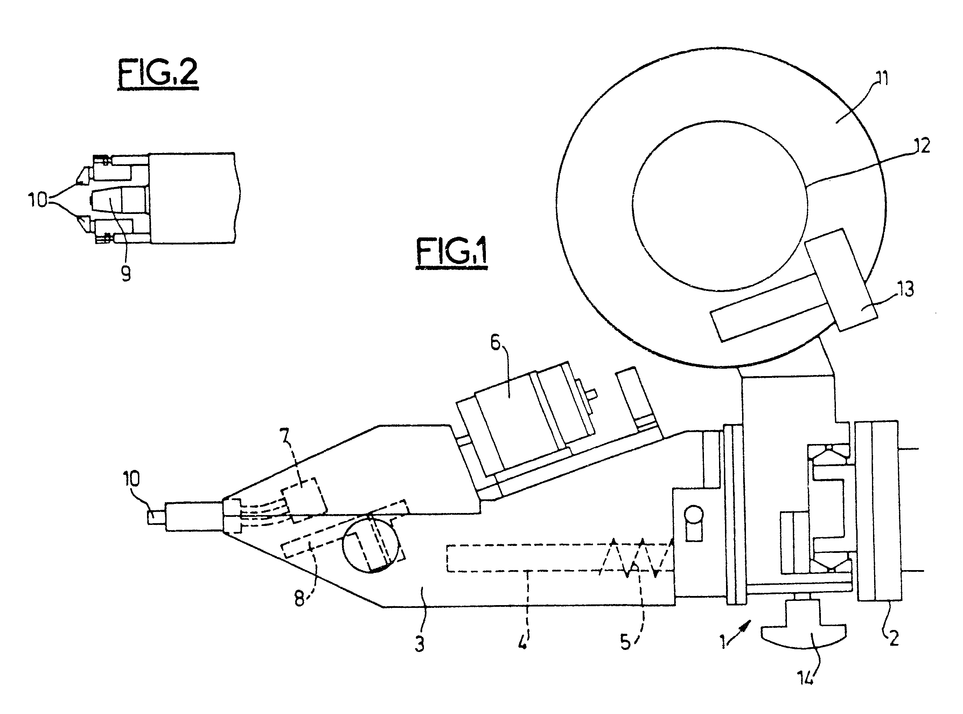

L'ensemble mobile de soudage représenté sur la fig. 1 comporte une base 1 agencée à l'aide de moyens connus pour pourvoir être fixée et retirée rapidement sur l'extrémitée 2 d'un bras de robot ou d'une machine automatique. Cette base porte la tête de soudage 3 par l'intermédiaire d'un assemblage à coulissement axial approprié, par exemple au moyen d'une colonne 4 solidaire de la base 1 et sur laquelle coulisse la tête 3 par l'intermédiaire de paliers à coulissement non représentées complétés par un guidage anti-rotation. Un ressort précontraint 5 est interposé entre la base 1 et la tête 3 pour limiter l'effort d'application de la tête sur la pièce à souder.

La tête de soudage 3 comporte un entraîneur de fil 6 de type connu, alimentant la torche 7 avec son dispositif de fixation rapide 8 et son tube de guidage 9 (voir fig. 2).

Selon une particularité de l'invention, cette tête de soudage 3 comporte également deux béquilles 10 d'appui et de retour de courant fixées de part et d'autre du tube guide 9. Ces béquilles jouent le double rôle de presseur mécanique, pour remplacer les dispositifs disparates de presseurs usuels, et de contact électrique pour assurer le retour du courant (pôle négatif).

L'ensemble mobile comporte également le dérouleur de fil 11 dont le moyeu est freiné par un frein électromagnétique à poudre 12 alimenté par un courant stabilisé par un dispositif non représenté pour assurer un couple de freinage constant. D'autre part, un capteur optique 13 permet de déterminer l'instant où la bobine est presque vide afin d'informer l'utilisateur ou le dispositif de commande automatique. Le dérouleur de fil 11 et ses accessoires (12 et 13) sont de préférence portés directement par la base 1.

Les divers organes sont de préférence interchangeables et facilement amovibles. L'entraîneur de fil 6, constitué d'une manière connue par un moteur avec un dispositif d'entraînement de fil à galets orbitaux, est fixé sur la tête 3 mais en est isolé électriquement. La torche 7 est montée comme on l'a vu sur un support 8 et se trouve préréglée sur ce support 8 à l'aide d'un banc de réglage. L'ensemble de la torche 7 et de son support 8 est donc interchangeable et se repositionne grâce à un guidage et un centrage précis. De cette façon l'alignement entre le moteur 6 et la torche 7 est toujours respecté et la position du tube de contact 9 reste constante. Les deux béquilles 10 sont également interchangeables et préréglés et elles peuvent affecter diverses formes selon les besoins.

Enfin, le dispositif d'assemblage précis de la base 1 sur l'extrémité 2 du bras de robot ou de la machine automatique comporte un ressort précontraint qui fournit la force de serrage nécessaire à des pièces complémentaires, mâles et femelles portées par les deux parties, pour assurer un positionnement rigoureux. Une poignée 14 permet à volonté de tendre ce ressort précontraint afin de retirer librement l'ensemble mobile, ou de le libérer pour assurer le repositionnement.

Le dispositif selon l'invention constitue par conséquent un ensemble comptact facilement transportable et rapidement adaptable à un robot ou une machine automatique. Le circuit de fil d'apport est réduit au minimum et ne se trouve plus sujet à des aléas dans des gaines. L'accostage et le retour de courant sont effectués au plus près de la zone à souder ce qui assure une grande efficacité et une constance du résultat. En outre, du fait que les mêmes béquilles sont utilisées pour assurer le retour du courant et presser les pièces à souder, il en résulte que le point de soudure ne sera pas effectué dans le cas de non contact de l'outil de soudage avec la pièce à souder par suite d'une mauvaise position de la pièce ou de l'outil.

La maintenance est facilitée par les démontages et les repositionnements rapides des divers organes interchangeables comme on l'a vu. La qualité du déroulage est améliorée par le frein à poudre et, enfin, le robot ou la machine automatique, qui est informé avant la fin de fil par le capteur 13 peut arrêter en temps voulu l'alimentation électrique de la torche ou sa mise en contact avec la pièce pour éviter toute détérioration du tube de contact 9.

## Revendications

1. Ensemble mobile de soudage par points avec métal d'apport sous atmosphère gazeuse comportant un dérouleur de fil (11), un entraîneur de fil (6), une torche de soudage (7) et un organe presseur assurant le retour du courant, caractérisé en ce que l'ensemble mobile comporte une base (1) destinée à être fixée à l'extrémitée d'un bras (2) de robot ou de machine automatique, et une tête de soudage (3) montée sur la base (1) de manière à pouvoir coulisser axialement par rapport à celle-ci, le dérouleur de fil (11) avec son frein (12) et l'entraîneur de fil (6) alimentant la torche de soudage (7) étant montés sur la base (1) à proximité de la zone de soudage, le pressur étant monté sur la tête de soudage (3) à proximité de l'arc, un ressort précontraint (5) étant prévu entre la base (1) et la tête (3) pour limiter l'effort d'accostage produit par le bras de robot ou de machine (2) au niveau de l'organe presseur.

2. Ensemble mobile selon la revendication 1, caractérisé par le fait que le frein (12) est constitué par un frein électromagnétique à poudre alimenté par une alimentation électrique stabilisée.

3. Ensemble selon l'un quelconque des revendications précédentes, caractérisé par le fait que le dérouleur de fil (11) comporte un capteur optique (13) envoyant un signal lorsque le bobine est presque vide, ce signal agissant sur la commande automatique en vue de procéder en temps voulu à l'interruption de l'arc, par arrêt de l'alimentation de la torche ou de son déplacement, et au remplacement de la réserve de fil.

4. Ensemble selon l'une quelconque des revendications précédentes, caractérisé par le fait qu'au moins la fixation de la torche (7) sur la tête (3) et la fixation de l'ensemble mobile (1, 3) sur le bras de manœuvre (2) se fait par l'intermédiaire de supports (8 et 1) permettant un préréglage et un assemblage rapide à positionnement rigoureux ne nécessitant qu'un minimum d'outillage pour le montage et le démontage.

**Patentansprüche**

1. Bewegbare Punktschweißanordnung mit Zusatzmetall unter Gasatmosphäre, mit einer Drahtablaufvorrichtung (11), einer Drahtvorschubvorrichtung (6), einem Schweißbrenner (7) und einem Andrückorgan zum Zurückleiten des Stroms, dadurch gekennzeichnet, daß die Anordnung ein Grundteil (1) aufweist zum Befestigen an einem Ende eines Armes (2) eines Roboters oder einer automatischen Maschine und einen Schweißkopf (3) aufweist, der am Grundteil (1) derart angeordnet ist, daß er zu ihm axial gleiten kann, daß die Drahtablaufvorrichtung (11) mit ihrer Bremse (12) und die Drahtvorschubvorrichtung (6), welche den Schweißbrenner (7) versorgen am Grundteil (1) in der Nähe der Schweißzone angeordnet sind, daß die Andruckvorrichtung am Schweißkopf (3) in der Nähe des Bogens angeordnet ist und daß eine vorgespannte Feder (5) zwischen dem Grundteil (1) und dem Kopf (3) vorgesehen ist, um die vom Arm des Roboters oder der Maschine (2) auf Höhe des Andruckorgans erzeugte Druckbelastung zu verringern.

2. Anordnung nach Anspruch 1, dadurch gekennzeichnet, daß die Bremse (12) aus einer elektromagnetischen Pulverbremse besteht, die mit einer stabilisierten elektrischen Leistung versorgt wird.

3. Anordnung nach einem der vorhergehenden Ansprüche, dadurch gekennzeichnet, daß die Drahtablaufvorrichtung (11) einen optischen Fühler (13) aufweist, der ein Signal abgibt, wenn die Spule beinahe leer ist, wobei dieses Signal auf die automatische Steuerung einwirkt um zu einer gegebenen Zeit den Bogen zu unterbrechen durch Unterbrechung der Versorgung des Brenners oder seine Verschiebung und um den Drahtvorrat zu ersetzen.

4. Anordnung nach einem der vorhergehenden Ansprüche, dadurch gekennzeichnet, daß wenigstens die Befestigung des Brenners (7) am Kopf (3) und die Befestigung der bewegbaren Anordnung (1, 3) am Betätigungsarm (2) mittels Halterungen (8 und 1) erfolgt, die eine Voreinstellung und einen schnellen und genauen Zusammenbau ermöglichen, so daß nur ein Minimum an Werkzeug zur Montage und zur Demontage erforderlich ist.

**Claims**

1. A movable apparatus for spot welding with filler metal under a gaseous atmosphere comprising a wire wind off means (11), a wire entrainment means (6), a welding torch (7) and a presser member for ensuring return of the current, characterised in that the movable apparatus comprises a base (1) for being fixed to the end of a robot or automatic machine arm (2), and a welding head (3) mounted on the base (1) so as to be capable of sliding axially with respect thereto, the wire wind off means (11) with its brake (12) and the wire entrainment means (6) supplying the welding torch (7) being mounted on the base (1) in the vicinity of the welding region, the presser member being mounted on the welding head (3) in the vicinity of the arc, a prestressed spring (5) being provided between the base (1) and the head (3) to limit the contact force produced by the robot or machine arm (2) at the location of the presser member.

2. Apparatus according to claim 1 characterised in that the brake (12) comprises a powder-type electromagnetic brake supplied by a stabilised electrical power supply.

3. Apparatus according to either one of the preceding claims characterised in that the wire wind-off means (11) comprises an optical detector (13) for producing a signal when the reel is almost empty, said signal acting on the automatic control means to provide at the required time for interruption of the arc, by terminating the power supply to the torch or the displacement thereof, and for replacement of the store of wire.

4. Apparatus according to any one of the preceding claims characterised in that at least the torch (7) is fixed on the head (3) and the apparatus (1, 3) is fixed to the operating arm (2) by way of supports (8 and 1) permitting pre-adjustment and rapid assembly with strict positioning requiring only minimum tooling for fitting and removal.

# FIG.2

# FIG.1

0 062 554